# EUROPEAN PATENT SPECIFICATION

(11) **EP 3 409 445 B1**
(45) Date of publication and mention of the grant of the patent: **02.09.2020**
(21) Application number: 18174309.7
(22) Date of filing: 25.05.2018
(51) Int. Cl.: B29C 64/209, B29C 64/118, B33Y 30/00, B33Y 10/00, B33Y 80/00

(54) **THREE-DIMENSIONAL PRINTER COMPRISING A NOZZLE WITH ECCENTRIC DICHARGE PORT**
DREIDIMENSIONALER DRUCKER, DER EINE DÜSE MIT EXZENTRISCHER AUSLASSÖFFNUNG UMFASST
IMPRIMANTE TRIDIMENSIONNELLE COMPRENANT UNE BUSE AVEC UN ORIFICE DE DÉCHARGE EXCENTRÉ

(30) Priority: 25.05.2017 KR 20170064888; 25.04.2018 KR 20180048019
(43) Date of publication of application: 05.12.2018
(73) Proprietor: Korea Institute of Science and Technology, Seoul 02792 (KR)
(72) Inventor: MOON, Myoung-Woon, 02792 Seoul (KR); JO, Wonjin, 02792 Seoul (KR); KWON, O Chang, 02792 Seoul (KR)
(74) Representative: Walaski, Jan Filip

(56) References cited:
- EP-A1- 2 905 118
- WO-A1-2016/193119
- CN-B- 103 876 263
- KR-B1- 101 575 061
- US-A1- 2015 119 479
- US-A1- 2015 197 060

## Description

One or more embodiments relate to a nozzle for a three-dimensional (3D) printer and a 3D printer including the nozzle, wherein the nozzle includes an eccentric discharge port.

### 2. Description of the Related Art

Three-dimensional (3D) printing refers to an additive manufacturing process that produces a desired shape through a process of stacking materials on the basis of 3D digital data obtained by, for example, scanning or modeling. It is known that 3D printing can save about 50 percent (%) or more of the energy required for manufacturing and reduce materials by more than 90%, compared to other processes.

3D printing is classified into 9 categories depending on the stacking method. Among these 9 categories, the material extrusion (ME) system is the simplest in terms of its hardware configuration, and thus a shape can be made directly even if the user is not an expert. Thus, 3D printers using the ME system are popular for home use. Among 3D printers using the ME system, 3D printers using thermoplastic resins, namely, 3D printers using fused filament fabrication (FFF) and fused deposition modeling (FDM), have become the most popular 3D printers, and these 3D printers mainly use filament-type plastic materials. These 3D printers dissolve a filament-type plastic material having a diameter of 1.75 millimeters (mm) or 3 mm, and discharge the filament-type plastic material through a nozzle.

Generally, in 3D printing such as 3D printing using the ME system, an output is produced by sequentially laminating materials. At this time, linear outputs constituting one layer are continuously printed to form an overall output. However, when using such linear outputs, it is difficult to enhance a strain rate or enlarge a surface area of the output due to limitations of physical properties of the materials. In order to enhance the strain rate of the output, a separate printing structure may be designed; however, this not only requires a separate design process, but also has limits in the realization of a complex shape with a combined structure consisting of a series of straight lines in a printing process.

Therefore, there is a great need for a novel 3D printing system that may increase a surface area and a strain rate of an output.

KR101575061 discloses a means for changing a nozzle of a 3D printer. EP2905118 discloses an apparatus including an extrusion nozzle. CN103876263 discloses a 3D printer.

According to an aspect of the invention, there is provided a 3D printer as set out in claim 1.

One or more embodiments include a nozzle for a three-dimensional (3D) printer that may output a meandering structure through a discharge port eccentrically located with respect to a center of a bottom surface of the nozzle.

One or more embodiments include a 3D printer that may increase a strain rate and a surface area of an output by employing the nozzle without a particular modification and with a relatively low cost.

Additional aspects will be set forth in part in the description which follows and, in part, will be apparent from the description, or may be learned by practice of the presented embodiments.

According to one or more embodiments, a nozzle for a three-dimensional (3D) printer to extrude a 3D printing material includes:

a discharge port in a bottom surface of the nozzle and configured to extrude the 3D printing material, the discharge port being eccentrically located with respect to a center of the bottom surface.

According to one or more embodiments, the discharge port may be located within a radius in a range of about 1 micrometer (µm) to about 100 centimeters (cm) from the center of the bottom surface.

According to one or more embodiments, a diameter of the discharge port may be in a range of about 10 percent (%) to about 30 % of a diameter of the nozzle.

According to one or more embodiments, the discharge port may have a circular shape, an oval shape, or a polygonal shape.

According to one or more embodiments, the bottom surface may have a circular shape, an oval shape, or a polygonal shape.

According to one or more embodiments, the 3D printing material may include at least one selected from a thermoplastic polymer, a metal, a composite material, and an eco-friendly material.

According to one or more embodiments, the thermoplastic polymer may be selected from polylactic acid (PLA), acrylonitrile-butadiene-styrene (ABS) resin, nylon, and polyvinyl alcohol.

According to one or more embodiments, the nozzle may further include a flow path through which the 3D printing material may pass, wherein the flow path may be connected to the discharge port located in the bottom surface.

According to one or more embodiments, the flow path may have a cylindrical shape; a tub shape of which a vertical cross-section of a rotational axis may be polygonal; or a polyhedral shape.

According to one or more embodiments, the flow path may be connected to the discharge port in a direction perpendicular to the bottom surface.

According to one or more embodiments, the flow path may be connected to the discharge port in a direction that is not perpendicular to the bottom surface.

According to one or more embodiments, the flow path may include at least one bent portion, or may not include a bent portion.

According to one or more embodiments, a 3D printer includes:
at least one nozzle unit including the nozzle described above;
a nozzle-shifting unit configured to shift the at least one nozzle unit in all directions; and
an output area under the at least one nozzle unit and on which the 3D printing material extruded from the nozzle is stacked and an output is formed.

According to one or more embodiments, a speed ratio (Vₜ/Vₚ) of a feeding speed (Vₜ) over a printing speed (Vₚ) is in a range of about 0.1 to about 10, wherein Vₚ is a speed required for forming the output, and Vₜ s a speed at which the 3D printing material is extruded from the nozzle.

According to one or more embodiments, the output area may include a substrate including at least one material selected from paper, wood, metal, and polymer.

According to one or more embodiments, the 3D printer may further include a driving unit for displacing the output area vertically.

According to one or more embodiments, the 3D printer may use fused filament fabrication (FFF), fused deposition modeling (FDM), or material extrusion (ME).

According to one or more embodiments, the output formed on the output area may include at least one curled area.

According to one or more embodiments, the output formed on the output area may include at least one pattern selected from a straight pattern, a wavy pattern, an alternating pattern, a coiling pattern, an overlapping pattern, and a braided pattern.

According to one or more embodiments, the output formed on the output area may have a multilayer structure formed by stacking at least two layers of the 3D printing material.

According to one or more embodiments, the multilayer structure may be:
i) a structure in which a layer including at least one curled area may be stacked, or
ii) a structure in which a layer including at least one curled area and a layer not including a curled area may be stacked in a random sequence.

According to one or more embodiments, a 3D printer for four-dimensional (4D) printing technology may include:
a first nozzle unit and a second nozzle unit, each including a nozzle for a 3D printer;
a nozzle-shifting unit configured to shift the first nozzle unit and the second nozzle unit in all directions; and
an output area under the first nozzle unit and the second nozzle unit and on which a 3D printing material extruded from each of the nozzles of the first nozzle unit and the second nozzle unit is stacked, respectively, and an output is formed, wherein at least one of the first nozzle unit and the second nozzle unit may include the nozzle described above.

According to one or more embodiments, i) at least one of the first nozzle unit and the second nozzle unit may further include a centric discharge port, or ii) the first nozzle unit and the second nozzle unit may each further include an eccentric discharge port.

### BRIEF DESCRIPTION OF THE DRAWINGS

These and/or other aspects will become apparent and more readily appreciated from the following description of the embodiments, taken in conjunction with the accompanying drawings in which:
FIG. 1A is a schematic view of a centric discharge port nozzle of the related art;
FIG. 1B is a schematic view of an embodiment of an eccentric discharge port nozzle;
FIG. 2 is a schematic view of another embodiment of an eccentric discharge port nozzle;
FIG. 3 shows images of meandering outputs formed by using an eccentric discharge port nozzle according to one or more embodiments according to a speed ratio Vₜ/Vₚ, the outputs being different from a linear output formed by using a centric discharge port nozzle of the related art;
FIG. 4 shows images of various patterns that may be included in outputs formed by using an eccentric discharge port nozzle according to one or more embodiments by controlling process parameters;
FIG. 5 shows graphs of deformation results of a tensile strength test performed on an output formed by using a centric discharge port nozzle of the related art and on an output formed by using an eccentric discharge port nozzle according to one or more embodiments;
FIG. 6A shows images of cross-sections of outputs of S-S structure;
FIG. 6B shows images of cross-sections of outputs of S-C structure which was implemented by using various pattern combinations;
Fig. 6C shows images of cross-sections of outputs of C-C structure which was implemented by using various pattern combinations;
FIG 7 is a graph of strain rates of outputs having a monolayer structure and strain rates of the outputs of multilayer structures in FIG. 6;
FIG. 8A shows images of the results of deformation behavior of the outputs of S-S structure which were implemented by using a centric discharge port nozzle of the related art;
FIG. 8B shows images of the results of deformation behavior of the outputs of S-C structure which were implemented by using an eccentric discharge port nozzle according to an embodiment;
FIG. 9A shows images of a 3D output implemented by using a centric discharge port nozzle of the related art; and
FIG. 9B shows images of a 3D output implemented by using an eccentric discharge port nozzle according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

The following detailed description of the present disclosure refers to the accompanying drawings, which illustrate, by way of example, embodiments in which the present disclosure may be practiced. These embodiments are described in sufficient detail to enable those skilled in the art to practice the present disclosure. It should be understood that various embodiments of the present disclosure are different, but need not be mutually exclusive. For example, a particular shape, structure, and characteristics described herein in connection with an embodiment may be embodied in different embodiments without departing from the scope of the present disclosure. It is also to be understood that the position or arrangement of individual components within each disclosed embodiment may be varied without departing from the scope of the present disclosure. The following detailed description is, therefore, not to be taken in a limiting sense, and the scope of the present disclosure is to be limited only by the appended claims, along with the full scope of equivalents to which the claims are entitled, if properly explained. In the drawings, like reference numerals refer to the same or similar functions.

Hereinafter, with reference to the attached drawings, a nozzle for a three-dimensional (3D) printer and a 3D printer including the nozzle according to an embodiment will be further described.

According to an aspect of the present disclosure, a nozzle for a 3D printer may be configured to extrude a 3D printing material, the nozzle including a discharge port in a bottom surface of the nozzle and configured to extrude the 3D printing material, and the discharge port being eccentrically located with respect to a center of the bottom surface.

The term 'being eccentrically located' as used herein refers to being located outside the center of a specific area, however, a degree of deviation from the center is not particularly limited. The term 'eccentric discharge port' as used herein refers to a discharge port that is eccentric with respect to the center of a bottom surface of a nozzle, and the term 'eccentric discharge port nozzle' as used herein refers to a nozzle including the eccentric discharge port.

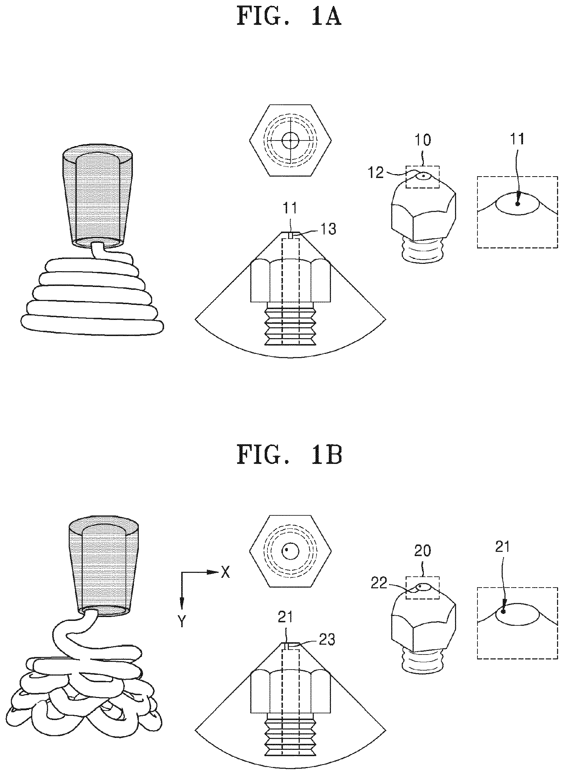

FIG. 1A is a schematic view of a centric discharge port nozzle of the related art. FIG. 1B is a schematic view of an embodiment of an eccentric discharge port nozzle. In particular, FIG. 1A is a schematic view of a centric discharge port nozzle of the related art and a layered form of a 3D printing material discharged from the centric discharge port nozzle of the related art, and FIG. 1B is a schematic view of an embodiment of an eccentric discharge port nozzle and a layered form of a 3D printing material discharged from the eccentric discharge port nozzle. In a centric discharge port nozzle 10 of the related art, a discharge port 11 may be located in the center of a bottom surface 12 of the nozzle, whereas, in an eccentric discharge port nozzle 20 according to an embodiment, a discharge port 21 may be eccentrically located with respect to the center of a bottom surface 22 of the nozzle.

As shown in FIGS. 1A and 1B, when the centric discharge port nozzle 10 of the related art is used, the layered form of the 3D printing material is almost linear, whereas, when the eccentric discharge port nozzle 20 according to an embodiment is used, the layered form of the 3D printing material may be in a meandering form, which may result in an increase in a strain rate of the output.

As the nozzle according to an embodiment includes an eccentric discharge port, the melted 3D printing material may flow irregularly, that is, a phenomenon in which the flow becomes faster in a portion near the discharge port than in a distant portion may occur. Thus, due to this difference in the discharge speed of the 3D printing material, an extrusion defect may occur. In particular, the irregular flow may cause an eccentric extrusion curvature and irregular local deformation. Thus, the 3D printing material may be discharged in a meandering form through the eccentric discharge port nozzle.

In some embodiments, the discharge port may be located within a radius in a range of about 1 micrometer (µm) to about 100 centimeters (cm) from the center of the bottom surface of the nozzle. According to one or more embodiments, the discharge port may be located within a radius in a range of about 1 µm to about 1,000 cm from the center of the bottom surface of the nozzle. In some embodiments, when a 3D printer including the discharge port is used to print a large structure, the discharge port may be located within a radius in a range of about 1 cm to about 100 cm from the center of the bottom surface of the nozzle. Outside of these ranges, when the discharge port is located within a radius less than 1 µm from the center of the bottom surface, a degree of decentration of the discharge port is generally low, and thus it may be difficult to achieve a desired strain rate.

According to one or more embodiments, a diameter of the discharge port may be in a range of about 10 percent (%) to about 30 % of a diameter of the nozzle for a 3D printer. Outside of this range, when a diameter of the discharge port is less than 10% of a diameter of the nozzle, clogging may often occur in the discharge port, and an output time may become excessively long when an output having an identical size is printed. On the other hand, when a diameter of the discharge port is greater than 30% of a diameter of the nozzle, it is difficult to control a meandering structure, and an output may be printed as a linear structure.

For example, the discharge port may have a diameter in a range of about 100 µm to about 400 µm. However, the diameter of the discharge port is not limited thereto. When a structure of the 3D printer is enlarged, the upper limit of the diameter of the discharge port may also be increased accordingly.

According to one or more embodiments, the discharge port may have a circular shape, an oval shape, or a polygonal shape. According to one or more embodiments, the bottom surface on which the discharge port is disposed may have a circular shape, an oval shape, or a polygonal shape. The shape of the discharge port and the shape of the bottom surface of the nozzle may be selected independently of each other. The shapes of the discharge port and the bottom surface may be identical to or different from each other.

In some embodiments, the 3D printing material may include at least one selected from a thermoplastic polymer, a metal, a composite material, and a bio-friendly material.

In this regard, the thermoplastic polymer may be selected from polylactic acid (PLA), acrylonitrile-butadiene-styrene (ABS) resin, nylon, and polyvinyl alcohol. When PLA is applied as the 3D printing material, it is suitable for the environment-friendly trend in recent technological development, since PLA is an environment-friendly resin and does not contain any harmful constituents, and further, PLA may undergo less shrinkage and less generation of bubbles than other materials, which may facilitate production. However, the 3D printing material is not limited to PLA. For example, the 3D printing material may include a metal, e.g., aluminum, platinum, silver, or gold, but embodiments are not limited thereto. For example, the 3D printing material may include a composite material, e.g., an organic light-emitting material or a composite material of TiO₂ and plastic, but embodiments are not limited thereto.

In some embodiments, the 3D printing material may have a filament form, but embodiments are not limited thereto.

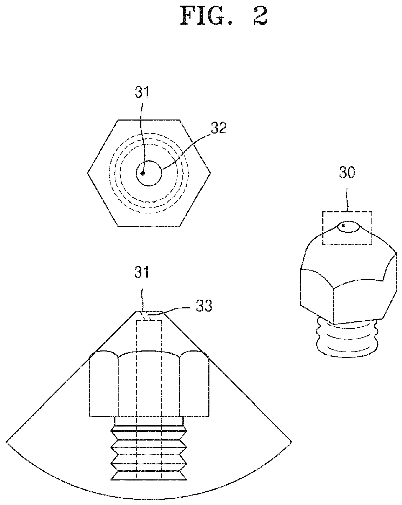

FIG. 2 is a schematic view of another embodiment of an eccentric discharge port nozzle. Hereinafter, with reference to FIGS. 1A, 1B, and 2, a flow path in the eccentric discharge port nozzle will be described.

In some embodiments, in the nozzle 20 or a nozzle 30 for a 3D printer, the nozzle 20 or 30 may further include a flow path 23 or 33, through which a 3D printing material passes, wherein the flow path 23 or 33 may be connected to the discharge port 21 or a discharge port 31 located in the bottom surface 22 or a bottom surface 32.

For example, the flow path may have a cylindrical shape, a tub shape of which a vertical cross-section of a rotational axis may be polygonal, or a polyhedral shape, but embodiments are not limited thereto.

In some embodiments, the flow path may be connected to the discharge port in a direction perpendicular to the bottom surface. In this regard, with reference to FIG. 1B, the flow path 23 included in the nozzle 20 may be connected to the discharge port 21 in a direction perpendicular to the bottom surface 22 (i.e., Y direction).

In some embodiments, the flow path may be connected to the discharge port in a direction that is not perpendicular to the bottom surface. In this regard, with reference to FIG. 2, the flow path 33 included in the nozzle 30 may be connected to the discharge port 31 in a direction that is not perpendicular to the bottom surface 32.

In some embodiments, the flow path may include at least one bent portion, or may not include a bent portion. When the flow path includes at least one bent portion, variables, such as the position of the bent portion, curvature, and the number of bent portions, may be controlled to obtain a desired level of a strain rate of the output.

According to another aspect of the present disclosure, a 3D printer may include at least one nozzle unit including the nozzle described above; a nozzle-shifting unit configured to shift the at least one nozzle unit in all directions; and an output area under the at least one nozzle unit, on which the 3D printing material extruded from the nozzle may be stacked, and an output may be formed.

The 3D printer includes at least one nozzle unit. For example, the 3D printer may include at least two nozzle units.

The speed ratio (Vₜ/Vₚ) of a feeding speed (Vₜ) over a printing speed (Vₚ) is in a range of about 0.1 to about 10, wherein Vₚ is a speed required for forming the output, and Vₜ is a speed at which the 3D printing material is discharged from the nozzle. For example, Vₜ/Vₚ may be in a range of about 1.0 to about 2.0, but embodiments are not limited thereto.

In the case of a centric discharge port nozzle of the related art, unless a particular additional apparatus is included, only a linear output may be formed. On the other hand, when a 3D printer includes the eccentric discharge port nozzle as described in the present disclosure, Vₜ/Vₚ may be controlled such that an output is formed in a desired shape.

According to one or more embodiments, the output formed on the output area may include at least one curled area.

According to one or more embodiments, the output formed on the output area may include at least one pattern selected from a straight pattern, a wavy pattern, an alternating pattern, a coiling pattern, an overlapping pattern, and a braided pattern.

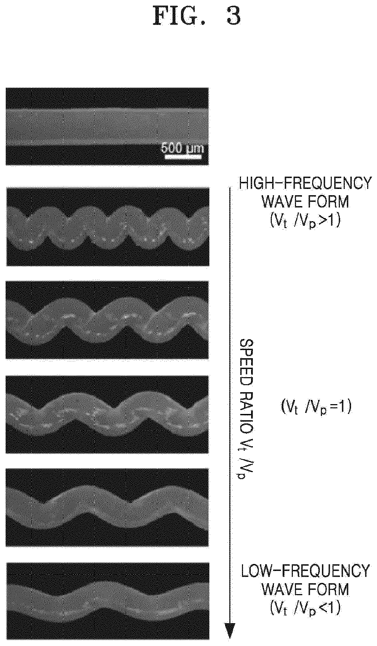

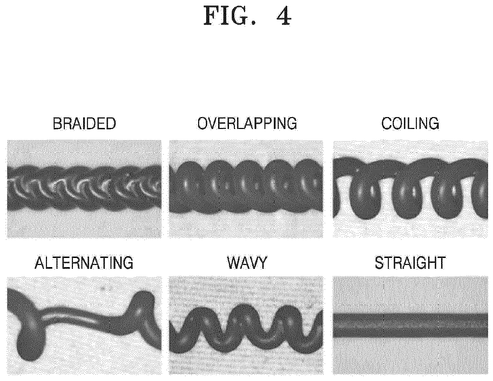

FIG. 3 shows images of meandering outputs formed by using an eccentric discharge port nozzle according to one or more embodiments, according to a speed ratio Vₜ/Vₚ, the outputs being different from a linear output formed by using a centric discharge port nozzle of the related art. FIG. 4 shows images of various patterns that may be included in outputs formed by using an eccentric discharge port nozzle according to one or more embodiments by controlling process parameters. Referring to FIG. 3, as Vₜ/Vₚ increases, the form of the output changes from a low frequency wave form to a high frequency wave form.

In particular, by controlling Vₜ/Vₚ, various shapes of meandering patterns may be formed. Examples thereof are as follows (the shapes of each pattern are shown in FIG. 4):
a) when Vₜ/Vₚ=1.0, a wavy pattern may be formed;
b) when 1.0<Vₜ/Vₚ≤1.4, an alternating pattern or a coiling pattern may be formed;
c) when 1.4<Vₜ/Vₚ≤1.6, an alternating pattern, a coiling pattern, or an overlapping pattern may be formed; and
d) when 1.6<Vₜ/Vₚ≤2.0, a coiling pattern, an overlapping pattern, or a braided pattern may be formed.

However, the above patterns are provided as examples only, and the shape of each pattern is not limited as described above according to the range of Vₜ/Vₚ.

When Vₜ/Vₚ, i.e., a speed ratio is high, the amount of the 3D printing material that is discharged may be excessive with respect to the printing speed. Thus, when the 3D printing material touches a surface, e.g., an output area on which the output is formed, the 3D printing material may be in a state of buckling instability. Accordingly, due to longitudinal compressive stress, a curled area having a curled form is formed. As Vₚ decreases, the difference between Vₚ and Vₜ may increase, and a greater amount of the 3D printing material may accumulate within the same printing distance. Thus, the frequency as well as the degree of meandering may further increase, which may result in a change of form from a wavy pattern to an overlapping pattern.

According to one or more embodiments, the output formed on the output area may have a multilayer structure formed by stacking at least two layers of the 3D printing material.

For example, the multilayer structure may be i) a structure in which a layer including at least one curled area may be stacked, or ii) a structure in which a layer including at least one curled area and a layer not including a curled area may be stacked in a random sequence.

In this regard, the layer including at least one curled area may include, for example, a wavy pattern, an alternating pattern, a coiling pattern, an overlapping pattern, or a braided pattern, but embodiments are not limited thereto. Further, the layer not including a curled area may include a straight pattern, but embodiments are not limited thereto.

For example, the multilayer structure may include a combination of various patterns including the straight pattern, the wavy pattern, the alternating pattern, the coiling pattern, the overlapping pattern, and the braided pattern. As described above, when an output having a multilayer structure is output through the eccentric discharge port nozzle, a strain rate of the output may be significantly improved compared to a centric discharge port nozzle of the related art.

In some embodiments, the output area may include a substrate including at least one material selected from paper, wood, metal, and polymer.

The 3D printer may further include a driving unit for displacing the output area in a vertical direction.

In some embodiments, a vertical length of the driving unit may be variable such that the position of the output area may be variable in a vertical direction.

In some embodiments, fused filament fabrication (FFF), fused deposition modeling (FDM), or material extrusion(ME) may be used by the 3D printer.

According to still another aspect of the present disclosure, a 3D printer for four-dimensional (4D) printing technology may include a first nozzle unit and a second nozzle unit, each including a nozzle for a 3D printer; a nozzle-shifting unit configured to shift the first nozzle unit and the second nozzle unit in all directions; and an output area under the first nozzle unit and the second nozzle unit and on which a 3D printing material discharged from each of the nozzles of the first nozzle unit and the second nozzle unit is stacked, respectively, and an output is formed, wherein at least one of the first nozzle unit and the second nozzle unit may include the nozzle described above.

That is, as described above, when a nozzle unit including a nozzle including the eccentric discharge port and an additional nozzle unit are included, the 3D printing materials discharged from each of the two nozzle units may be stacked in a sequence to form a desired output, thereby establishing a 3D printer for 4D printing technology.

According to one or more embodiments, i) the second nozzle unit may include a centric discharge port, or ii) the first nozzle unit and the second nozzle unit may each include an eccentric discharge port. For example, the first nozzle unit may include an eccentric discharge port, and the second nozzle unit may include a centric discharge port. For example, the first nozzle unit and the second nozzle unit may each include an eccentric discharge port. For example, the first nozzle unit and the second nozzle unit may each be on a plane parallel with the output area. For example, the first nozzle unit and the second nozzle unit may each be on a plane that is not parallel with the output area.

Here, other than the nozzle for a 3D printer, structures of a 3D printer or a 3D printer for 4D printing technology and methods of manufacturing a 3D printer or a 3D printer for 4D printing technology are known in the art. Therefore, detailed descriptions thereof are omitted herein.

Hereinafter, the effects of the present disclosure will be described in detail through experimental examples.

### Experimental Example 1

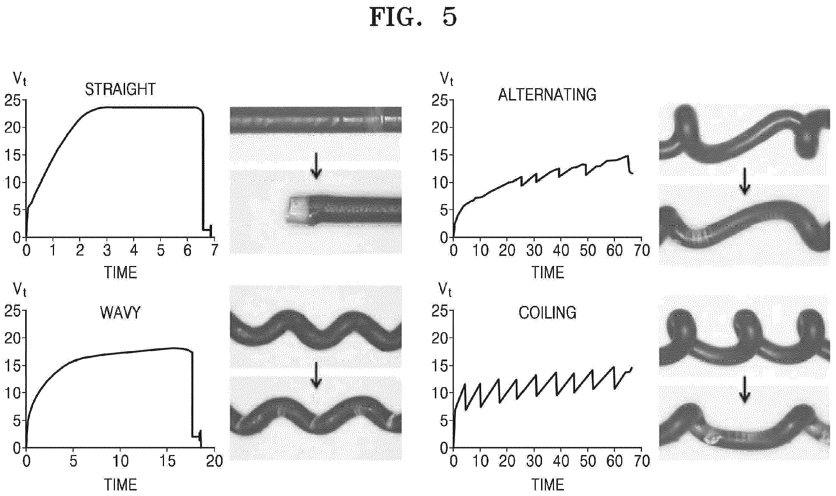

Tension samples were prepared by forming outputs under the same conditions except that a centric discharge port nozzle of the related art or an eccentric discharge port nozzle was used to form the outputs. Then, a tensile strength test was performed on each tension sample. The deformation results of the tensile strength test are shown in FIG. 5 as graphs.

Referring to FIG. 5, in the case of the tension sample prepared by using the eccentric discharge port nozzle, a speed ratio may be controlled by fixing Vₚ and by varying Vₜ among preparation process parameters to prepare patterns of various shapes, unlike the tension sample prepared by using the centric discharge port nozzle. In particular, as compared with the straight pattern, the coiling pattern may exhibit about 10 times or more deformation.

### Experimental Example 2

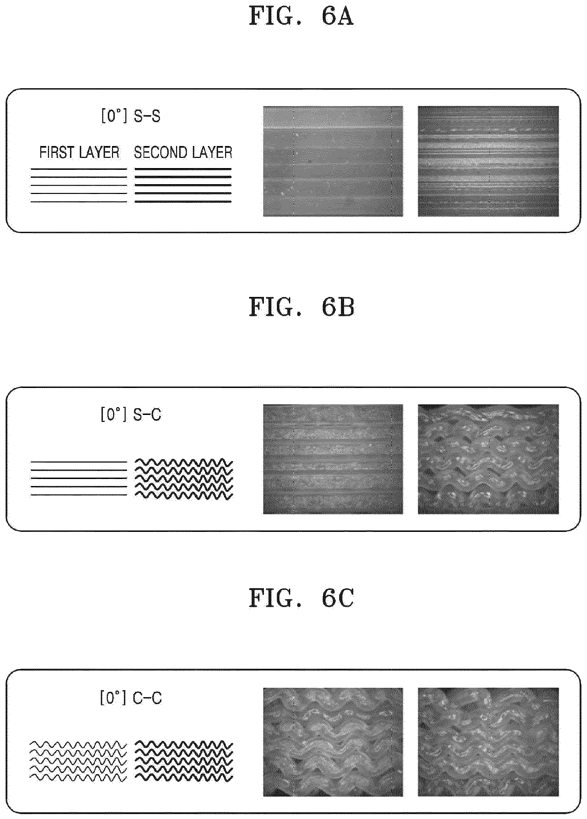

A multilayer structure in which two linear layers were stacked by using a centric discharge port nozzle of the related art (hereinafter referred to as an S-S structure (hereinafter 'S' indicates 'straight')); a structure in which a first layer was stacked by using a centric discharge port nozzle, and a second layer was stacked by using an eccentric discharge port nozzle (hereinafter referred to as an S-C structure (hereinafter 'C' indicates 'curled')); and a structure in which two layers were stacked by using an eccentric discharge port (hereinafter referred to as a C-C structure) were output. The cross-sections of the outputs of the S-S structure, the S-C structure, and the C-C structure are shown in FIGS. 6A, 6B, and 6C. In particular, FIG. 6A illustrates the S-S structure, FIG. 6B illustrates the S-C structure, and FIG. 6C illustrates the C-C structure.

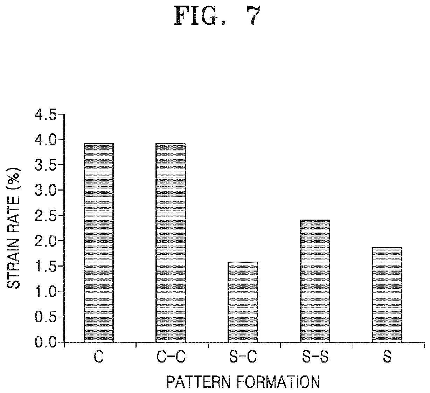

In addition to the outputs, the tensile strength test was performed on an output of a monolayer structure formed by using a centric discharge port nozzle (hereinafter, referred to as an S structure) and an output of a monolayer structure formed by using an eccentric discharge port nozzle (hereinafter, referred to as a C structure). In the tensile strength test, the strain rates of the outputs were measured, and the results thereof are shown in the graph of FIG. 7.

Referring to FIG. 7, among the outputs formed by using the centric discharge port nozzle, the S structure has a strain rate of 1.87%, and the S-S structure has a strain rate of 2.42%. However, among the outputs formed by using the eccentric discharge port nozzle, the C structure has a strain rate of 3.92%, and the C-C structure has a strain rate of 3.94%. In other words, in the case of the outputs formed by using the eccentric discharge port nozzle, the monolayer structure and the multilayer structure each were found to have a high strain rate, as compared with the outputs formed by using the centric discharge port nozzle.

In particular, the S-C structure was found to have a strain rate of 1.58%, which is even lower than the S structure or the S-S structure.

### Experimental Example 3

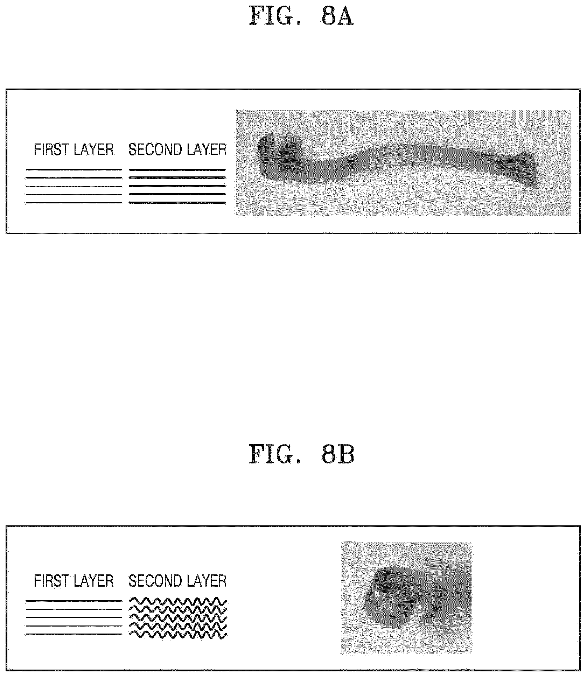

So that an output after being stacked may respond to heat, PLA, which is a thermoplastic material, was used as a 3D printing material to prepare outputs. Using the characteristics of the thermoplastic material, outputs were stretched twice longer at temperatures above the glass transition temperature of PLA. The deformed shape was then fixed at a temperature under the glass transition temperature of PLA. Thereafter, the deformed shape may tend to revert to its original shape once the deformed shape is exposed to a temperature above the glass transition temperature. Here, depending on the characteristics of the material or the structure, different deformation may be induced. FIGS. 8A and 8B show the results of effects of a meandering pattern prepared using an eccentric discharge port nozzle by utilizing the above-described characteristics. FIG. 8A shows images of the results of deformation behavior of the outputs of S-S structure which were implemented by using a centric discharge port nozzle according to the related art, and FIG. 8B shows images of the results of deformation behavior of the outputs of S-C structure which were implemented by using an eccentric discharge port nozzle according to an embodiment. As shown in FIG. 8A, in the case of the S-S structure in which the first and second layers had the same pattern, when the temperature was changed from 100 °C to 25 °C, little change occurred because the relative deformation behaviors were the same. However, in the case of the S-C structure as shown in FIG. 8B, due to the difference between the strain rate of the straight line and that of the meandering line, the C line was deformed to a greater degree, and thus curled to have the form of an S.

### Experimental Example 4

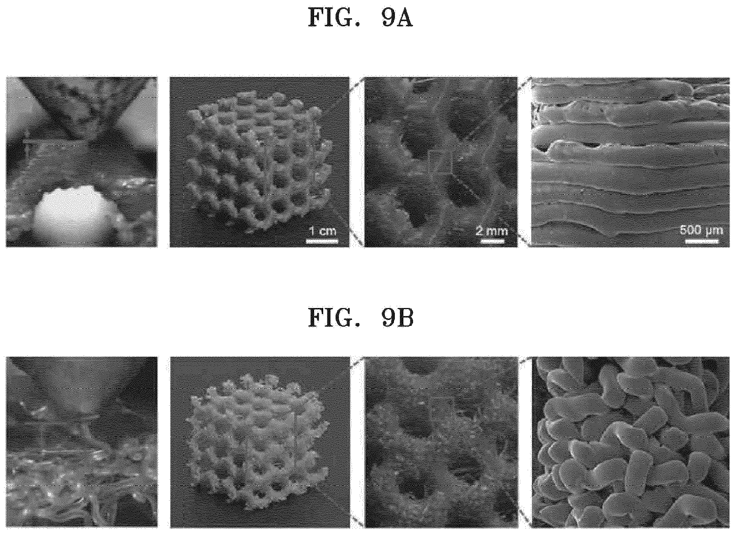

3D structures were prepared by forming outputs under the same condition except that a centric discharge port nozzle of the related art or an eccentric discharge port nozzle was used to form the outputs. The images of the 3D structures are shown in FIGS. 9A and 9B. In particular, FIG. 9A is an image of a 3D structure output by using a centric discharge port nozzle of the related art. FIG. 9B is an image of a 3D structure output by using an eccentric discharge port nozzle.

Referring to FIG. 9A, in the case of the 3D structure output by using the centric discharge port nozzle of the related art, upon being output, the printing material is stacked such that a gap is input between layers. Thus, the 3D structure has a relatively uniform surface shape and a relatively small surface area.

On the other hand, referring to FIG. 9B, in the case of the 3D structure output by using the eccentric discharge port nozzle according to an embodiment, the output has a meandering shape. Thus, the output has a relatively large surface area, as compared with the centric discharge port nozzle of the related art.

As the nozzle for a 3D printer and a 3D printer including the nozzle include a discharge port eccentrically located with respect to the center of the nozzle, upon stacking an output, the surface area of the output may be enlarged and a strain rate of the output may be increased if the output is formed in lines of various curved shapes other than a straight line. Accordingly, an output having a structure with excellent physical properties beyond the deformation limit of a 3D printing material may be realized. In particular, in the existing material extrusion (ME) system, hardware may be configured by changing a nozzle structure only. Further, by controlling a position of a nozzle discharge port and stacking conditions such as speed ratio, a surface area of an output may be increased, and the deformation limit may be improved.

As apparent from the foregoing description, when the nozzle according to the present disclosure is used, by changing a nozzle only, a 3D printer may have a significantly increased strain rate of an output, as compared with 3D printers of the related art. Also, it is possible to produce an output having a more complex and creative structure while maintaining the same level of production speed as 3D printers of the related art, thereby allowing production of a 3D curved surface having a large surface area.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the scope of the disclosure as defined by the following claims.

## Claims

1. A three-dimensional (3D) printer comprising:
at least one nozzle unit comprising a nozzle (20, 30) to extrude a 3D printing material;
a nozzle-shifting unit configured to shift the at least one nozzle unit in all directions; and
an output area under the at least one nozzle unit and on which the 3D printing material extruded from the nozzle (20, 30) is stacked and an output is formed,
wherein the nozzle (20, 30) comprises: a discharge port (21, 31) in a bottom surface (22, 32) of the nozzle (20, 30) and configured to extrude the 3D printing material, the discharge port (21, 31) being eccentrically located with respect to a center of the bottom surface (22, 32), and
wherein the 3D printer further comprises a controller configured to control a speed ratio (Vt/Vp) of a discharge speed (Vt) over a printing speed (Vp) to be in a range of about 0.1 to about 10, wherein Vp is a speed of the nozzle (20, 30) while forming the output, and Vt is a speed at which the 3D printing material is extruded from the nozzle.

2. The 3D printer of claim 1, wherein the discharge port is located within a radius in a range of about 1 micrometer (µm) to about 100 centimeters (cm) from the center of the bottom surface.

3. The 3D printer of claim 1 or 2, wherein a diameter of the discharge port is in a range of about 10 percent (%) to about 30 % of a diameter of the bottom surface of the nozzle.

4. The 3D printer of claim 1, 2 or 3, wherein the discharge port has a circular shape, an oval shape, or a polygonal shape, and/or wherein the bottom surface has a circular shape, an oval shape, or a polygonal shape.

5. The 3D printer of any one of the preceding claims, further comprising a flow path (23, 33) through which the 3D printing material passes, wherein the flow path is connected to the discharge port located in the bottom surface, optionally wherein the flow path has a cylindrical shape; a tub shape of which a vertical cross-section of a rotational axis is polygonal; or a polyhedral shape.

6. The 3D printer of claim 5, wherein the flow path is connected to the discharge port in a direction perpendicular to the bottom surface, or in a direction that is not perpendicular to the bottom surface.

7. The 3D printer of claim 5 or 6, wherein the flow path comprises at least one bent portion, or does not comprise a bent portion.

8. The 3D printer of claim 1, wherein the output formed on the output area comprises at least one curled area, and/or wherein the output formed on the output area comprises at least one pattern selected from a straight pattern, a wavy pattern, an alternating pattern, a coiling pattern, an overlapping pattern, and a braided pattern.

9. The 3D printer of claim 1 or 8, wherein the output formed on the output area has a multilayer structure formed by stacking at least two layers of the 3D printing material, optionally wherein the multilayer structure is:
i) a structure in which a layer comprising at least one curled area is stacked, or
ii) a structure in which a layer comprising at least one curled area and a layer not comprising a curled area are stacked in a random sequence.

10. The 3D printer of claim 1, 8 or 9, further comprising a driving unit for displacing the output area vertically.

11. The 3D printer of any one of claims 1 or 8 to 10, wherein the 3D printer uses fused filament fabrication (FFF), fused deposition modeling (FDM), or material extrusion(ME) .

12. The 3D printer of any one of the preceding claims, wherein the 3D printer comprises:
a first nozzle unit and a second nozzle unit,
wherein the at least one nozzle unit is the first nozzle unit,
wherein the second nozzle unit comprises a second nozzle,
wherein the nozzle-shifting unit is configured to shift the first nozzle unit and the second nozzle unit in all directions,
wherein the output area is under the first nozzle unit and the second nozzle unit and a 3D printing material extruded from each of the nozzles of the first nozzle unit and the second nozzle unit is stacked on the output area, and the output is formed, and
wherein the second nozzle may comprise a second discharge port in a second bottom surface of the second nozzle and configured to extrude the 3D printing material, the second discharge port being eccentrically located with respect to a center of the second bottom surface.

13. The 3D printer of claim 12, wherein i) the second nozzle unit comprises a centric discharge port, or ii) the first nozzle unit and the second nozzle unit each comprise an eccentric discharge port.

## Patentansprüche

1. Dreidimensionaler Drucker (3D-Drucker), der Folgendes umfasst:
mindestens eine Düseneinheit, die eine Düse (20, 30) umfasst, um ein 3D-Druckmaterial zu extrudieren;
eine Düsenverschiebungseinheit, die ausgelegt ist, um die mindestens eine Düseneinheit in alle Richtungen zu verschieben; und
einen Ausgabebereich, der unter der mindestens einen Düseneinheit liegt und auf dem das 3D-Druckmaterial, das aus der Düse (20, 30) extrudiert wird, gestapelt wird und eine Ausgabe gebildet wird,
wobei die Düse (20, 30) Folgendes umfasst: eine Austrittsöffnung (21, 31), die sich in einer unteren Fläche (22, 32) der Düse (20, 30) befindet und ausgelegt ist, um das 3D-Druckmaterial zu extrudieren, wobei die Austrittsöffnung (21, 31) in Bezug auf eine Mitte der unteren Fläche (22, 32) außermittig angeordnet ist, und
wobei der 3D-Drucker ferner ein Steuergerät umfasst, das ausgelegt ist, um zu steuern, dass ein Geschwindigkeitsverhältnis (Vt/Vp) einer Austrittsgeschwindigkeit (Vt) gegenüber einer Druckgeschwindigkeit (Vp) in einem Bereich von etwa 0,1 bis etwa 10 liegt, wobei Vp eine Geschwindigkeit der Düse (20, 30) während des Bildens der Ausgabe ist und Vt eine Geschwindigkeit ist, mit der das 3D-Druckmaterial aus der Düse extrudiert wird.

2. 3D-Drucker nach Anspruch 1, wobei die Austrittsöffnung innerhalb eines Radius in einem Bereich von etwa 1 Mikrometer (µm) bis etwa 100 Zentimeter (cm) von der Mitte der unteren Fläche angeordnet ist.

3. 3D-Drucker nach Anspruch 1 oder 2, wobei ein Durchmesser der Austrittsöffnung in einem Bereich von etwa 10 Prozent (%) bis etwa 30 % eines Durchmessers der unteren Fläche der Düse liegt.

4. 3D-Drucker nach Anspruch 1, 2 oder 3, wobei die Austrittsöffnung eine kreisrunde Form, eine ovale Form oder eine polygonale Form aufweist und/oder wobei die untere Fläche eine kreisrunde Form, eine ovale Form oder eine polygonale Form aufweist.

5. 3D-Drucker nach einem der vorhergehenden Ansprüche, der ferner einen Flusspfad (23, 33) umfasst, über den das 3D-Druckmaterial läuft, wobei der Flusspfad mit der Austrittsöffnung verbunden ist, die in der unteren Fläche angeordnet ist, wobei optional der Flusspfad eine zylindrische Form, eine Wannenform, bei der ein vertikaler Querschnitt einer Drehachse polygonal ist, oder eine polyedrische Form aufweist.

6. 3D-Drucker nach Anspruch 5, wobei der Flusspfad mit der Austrittsöffnung in einer zur unteren Fläche senkrechten Richtung oder in einer zur unteren Fläche nicht senkrechten Richtung verbunden ist.

7. 3D-Drucker nach Anspruch 5 oder 6, wobei der Flusspfad mindestens einen gebogenen Abschnitt umfasst oder keinen gebogenen Abschnitt umfasst.

8. 3D-Drucker nach Anspruch 1, wobei die Ausgabe, die auf dem Ausgabebereich gebildet wird, mindestens einen gewellten Bereich umfasst und/oder wobei die Ausgabe, die auf dem Ausgabebereich gebildet wird, mindestens ein Muster umfasst, das aus einem geraden Muster, einem wellenförmigen Muster, einem alternierenden Muster, einem gewundenen Muster, einem überlappenden Muster und einem geflechtförmigen Muster ausgewählt wird.

9. 3D-Drucker nach Anspruch 1 oder 8, wobei die Ausgabe, die auf dem Ausgabebereich gebildet wird, eine Mehrlagen-Struktur aufweist, die durch Stapeln von mindestens zwei Lagen des 3D-Druckmaterials gebildet wird, wobei optional die Mehrlagen-Struktur Folgendes ist:
i) eine Struktur, bei der eine Lage, die mindestens einen gewellten Bereich umfasst, gestapelt ist, oder
ii) eine Struktur, bei der eine Lage, die mindestens einen gewellten Bereich umfasst, und eine Lage, die keinen gewellten Bereich umfasst, in einer zufälligen Reihenfolge gestapelt sind.

10. 3D-Drucker nach Anspruch 1, 8 oder 9, der ferner eine Antriebseinheit zum vertikalen Versetzen des Ausgabebereichs umfasst.

11. 3D-Drucker nach einem der Ansprüche 1 oder 8 bis 10, wobei der 3D-Drucker Fused-Filament-Fabrication (FFF), Fused-Deposition-Modeling (FDM) oder Materialextrusion (ME) verwendet.

12. 3D-Drucker nach einem der vorhergehenden Ansprüche, wobei der 3D-Drucker Folgendes umfasst:
eine erste Düseneinheit und eine zweite Düseneinheit,
wobei die mindestens eine Düseneinheit die erste Düseneinheit ist,
wobei die zweite Düseneinheit eine zweite Düse umfasst,
wobei die Düsenverschiebungseinheit ausgelegt ist, um die erste Düseneinheit und die zweite Düseneinheit in alle Richtungen zu verschieben,
wobei der Ausgabebereich unter der ersten Düseneinheit und der zweiten Düseneinheit liegt und ein 3D-Druckmaterial, das aus jeder der Düsen der ersten Düseneinheit und der zweiten Düseneinheit extrudiert wird, auf dem Ausgabebereich gestapelt wird, und die Ausgabe gebildet wird und
wobei die zweite Düse eine zweite Austrittsöffnung in einer zweiten unteren Fläche der zweiten Düse umfassen kann und ausgelegt ist, um das 3D-Druckmaterial extrudieren, wobei die zweite Austrittsöffnung in Bezug auf eine Mitte der zweiten unteren Fläche außermittig angeordnet ist.

13. 3D-Drucker nach Anspruch 12, wobei i) die zweite Düseneinheit eine mittige Austrittsöffnung umfasst, oder ii) die erste Düseneinheit und die zweite Düseneinheit jeweils eine außermittige Austrittsöffnung umfassen.

## Revendications

1. Imprimante tridimensionnelle (3D) comportant :
au moins une unité de buse comportant une buse (20, 30) servant à extruder un matériau d'impression 3D ;
une unité de décalage de buse configurée pour décaler ladite au moins une unité de buse dans toutes les directions ; et
une zone de sortie sous ladite au moins une unité de buse et sur laquelle le matériau d'impression 3D extrudé en provenance de la buse (20, 30) est empilé et une sortie est formée,
dans laquelle la buse (20, 30) comporte : un orifice de décharge (21, 31) dans une surface inférieure (22, 32) de la buse (20, 30) et configuré pour extruder le matériau d'impression 3D, l'orifice de décharge (21, 31) étant situé de manière excentrée par rapport à un centre de la surface inférieure (22, 32), et
dans laquelle l'imprimante 3D comporte par ailleurs un dispositif de commande configuré pour commander un rapport de vitesse (Vt/Vp) d'une vitesse de décharge (Vt) par rapport à une vitesse d'impression (Vp) pour qu'il se trouve dans une plage allant d'environ 0,1 à environ 10, où Vp est une vitesse de la buse (20, 30) lors de la formation de la sortie, et Vt est une vitesse à laquelle le matériau d'impression 3D est extrudé en provenance de la buse.

2. Imprimante 3D selon la revendication 1, dans laquelle l'orifice de décharge est situé dans les limites d'un rayon dans une plage allant d'environ 1 micromètre (µm) à environ 100 centimètres (cm) depuis le centre de la surface inférieure.

3. Imprimante 3D selon la revendication 1 ou la revendication 2, dans laquelle un diamètre de l'orifice de décharge est dans une plage allant d'environ 10 pour cent (%) à environ 30 % d'un diamètre de la surface inférieure de la buse.

4. Imprimante 3D selon la revendication 1, la revendication 2 ou la revendication 3, dans laquelle l'orifice de décharge a une forme circulaire, une forme ovale, ou une forme polygonale, et/ou dans laquelle la surface inférieure a une forme circulaire, une forme ovale, ou une forme polygonale.

5. Imprimante 3D selon l'une quelconque des revendications précédentes, comportant par ailleurs un trajet d'écoulement (23, 33) au travers duquel le matériau d'impression 3D passe, dans laquelle le trajet d'écoulement est raccordé à l'orifice de décharge situé dans la surface inférieure, éventuellement dans laquelle le trajet d'écoulement a une forme cylindrique ; une forme de petit pot dont une coupe transversale verticale d'un axe de rotation est polygonale ; ou une forme de polyèdre.

6. Imprimante 3D selon la revendication 5, dans laquelle le trajet d'écoulement est raccordé à l'orifice de décharge dans une direction perpendiculaire par rapport à la surface inférieure, ou dans une direction qui n'est pas perpendiculaire par rapport à la surface inférieure.

7. Imprimante 3D selon la revendication 5 ou la revendication 6, dans laquelle le trajet d'écoulement comporte au moins une partie courbe, ou ne comporte pas de partie courbe.

8. Imprimante 3D selon la revendication 1, dans laquelle la sortie formée sur la zone de sortie comporte au moins une zone en spirale, et/ou dans laquelle la sortie formée sur la zone de sortie comporte au moins une configuration sélectionnée parmi une configuration droite, une configuration ondulée, une configuration en alternance, une configuration en serpentin, une configuration de chevauchement, et une configuration tressée.

9. Imprimante 3D selon la revendication 1 ou la revendication 8, dans laquelle la sortie formée sur la zone de sortie a une structure multicouche formée en empilant au moins deux couches du matériau d'impression 3D, éventuellement dans laquelle la structure multicouche est :
i) une structure dans laquelle une couche comportant au moins une zone en spirale est empilée, ou
ii) une structure dans laquelle une couche comportant au moins une zone en spirale et une couche ne comportant pas une zone en spirale sont empilées selon une séquence aléatoire.

10. Imprimante 3D selon la revendication 1, la revendication 8 ou la revendication 9, comportant par ailleurs une unité d'entraînement servant à déplacer la zone de sortie à la verticale.

11. Imprimante 3D selon l'une quelconque des revendications 1 ou 8 à 10, dans laquelle l'imprimante 3D utilise le dépôt de filament en fusion (FFF), le dépôt de fil fondu (FDM), ou l'extrusion de matériau (ME).

12. Imprimante 3D selon l'une quelconque des revendications précédentes, dans laquelle l'imprimante 3D comporte :
une première unité de buse et une deuxième unité de buse,
dans laquelle ladite au moins une unité de buse est la première unité de buse,
dans laquelle la deuxième unité de buse comporte une deuxième buse,
dans laquelle l'unité de décalage de buse est configurée pour décaler la première unité de buse et la deuxième unité de buse dans toutes les directions,
dans laquelle la zone de sortie est sous la première unité de buse et la deuxième unité de buse et un matériau d'impression 3D extrudé en provenance de chacune des buses de la première unité de buse et de la deuxième unité de buse est empilé sur la zone de sortie, et la sortie est formée, et
dans laquelle la deuxième buse peut comporter un deuxième orifice de décharge dans une deuxième surface inférieure de la deuxième buse et configuré pour extruder le matériau d'impression 3D, le deuxième orifice de décharge étant situé de manière excentrée par rapport à un centre de la deuxième surface inférieure.

13. Imprimante 3D selon la revendication 12, dans laquelle i) la deuxième unité de buse comporte un orifice de décharge centrée, ou ii) la première unité de buse et la deuxième unité de buse comportent chacune un orifice de décharge excentrée.
